# EUROPEAN PATENT APPLICATION

(11) **EP 4 807 233 A1**
(43) Date of publication of application: **16.09.2026**
(21) Application number: 26164056.9
(22) Date of filing: 11.03.2026
(51) Int. Cl.: F17C 1/00, F17C 3/02, F17C 3/08

(54) **SUBSURFACE STORAGE SYSTEM**

(30) Priority: 13.03.2025 US 202563771133 P
(71) Applicant: Good Water Energy Ltd., Claremont, WA 6010 (AU)
(72) Inventor: Strange, Warren Ross, Claremont, Western Australia (AU)
(74) Representative: K&L Gates LLP

(57) **Abstract**

The present disclosure relates to a hydrogen storage system comprising a well extending below a ground surface, through external geology; an inner casing extending substantially the depth of the well to define a hydrogen storage chamber within the well, to store liquid hydrogen; and at least one outer casing extending substantially the depth of the well, to define an insulation chamber located between the hydrogen storage chamber and the external geology.

## Description

### TECHNICAL FIELD

The disclosure herein is directed to a subsurface storage system. The disclosure has particular application to the storage of hydrogen, and will be described predominantly in relation to that application, although embodiments of the disclosure may be used for storing other fluids.

### BACKGROUND

It is to be understood that, if any prior art publication is referred to herein, such reference does not constitute an admission that the publication forms a part of the common general knowledge in the art.

Global warming is having a disastrous effect on the planet and weather patterns around the globe. A main contributor, if not the main contributor, is the emission of greenhouse gases, particularly carbon dioxide, into the atmosphere. According to the World Meteorological Organization (WMO) the concentrations of Carbon dioxide in the atmosphere have increased by more than 148% since 1750. Carbon dioxide is produced by many industrial processes including the burning of fossil fuels.

As the planet gets warmer and drier, the release of carbon dioxide into the atmosphere accelerates: forests in drought release carbon dioxide into the atmosphere; light-reflecting snow cover from the poles continues to reduce; and the pH levels of our oceans drop as our oceans acidify from the uptake of increased carbon dioxide.

Carbon dioxide is a byproduct of many traditional energy production methods, particularly energy production from fossil fuels. Accordingly, efforts are being made to explore alternative fuel sources. Hydrogen is considered a promising energy source due to its high energy density and versatility, but also because it is a clean energy source - in particular, when burned or used in a fuel cell, hydrogen doesn't release carbon dioxide.

However, hydrogen is challenging to store efficiently. To store hydrogen gas in a tank, it usually needs to be compressed to extremely high pressures. Alternatively, hydrogen can be cooled to very low, cryogenic temperatures (-253 Celsius) to allow it to be stored in liquid form. Storing hydrogen as liquid hydrogen reduces the CAPEX of hydrogen storage systems (tanks etc). However, the cost of maintaining the temperature of hydrogen below minus 253 Degree Celsius uses a lot of anergy.

Insulated liquid hydrogen storage systems (insulated tanks) improve the efficiency of maintaining the low temperature, but significant costs are required to keep the hydrogen in liquid state. The CAPEX of conventional insulated liquid hydrogen tanks is well over US$1m per tonne of hydrogen storage capacity. In addition, conventional hydrogen tanks located close to end users (such as refuelling stations) pose high risks to people and property - for instance, if there is an accident or wilful damage, resulting in the hydrogen being ignited.

Accordingly, hydrogen storage remains a significant challenge.

### SUMMARY

In a first embodiment, there is provided a subsurface hydrogen storage system comprising:
a well extending below a ground surface, through external geology;
an inner casing extending substantially the depth of the well to define a hydrogen storage chamber within the well, to store liquid hydrogen; and
at least one outer casing extending substantially the depth of the well, to define an insulation chamber located between the hydrogen storage chamber and the external geology.

The general principle of storing hydrogen in a well below the surface is advantageous, because the external geology temperatures are generally lower than the ambient surface temperature and less energy is required to maintain hydrogen as a liquid. However, insulation is still highly useful, to separate the earth's geology temperature from the much lower temperature required for liquid hydrogen, and reducing the cost of maintaining the hydrogen in liquid form.

In preferred embodiments, the insulation chamber is a vacuum insulation chamber. Vacuum insulation is generally the most efficient type of insulation. In such embodiments, the insulation chamber can have a sealable opening, with flow through the opening controlled using a valve. Air can be pumped out of the insulation chamber, through the sealable opening, to create a vacuum within the insulation chamber.

Alternatively, in some embodiments or at the end of the life of the hydrogen storage system, the insulation chamber may be filled with an insulation material. For example, an oil, foam or ceramic material could be pumped into the insulation chamber to provide insulation.

The insulation chamber may be defined by the inner casing and a single outer casing. These casings may extend vertically down the well, and across the base of the well via bottom caps at the bottom of each casing. Each of these casings may be formed of a plurality of casing sections or sections. The sections are preferably tubular sections formed of standard casing/piping material. The sections may be connected vertically using threaded joints.

The inner casing may be provided with a hydrogen resistant lining on its inner surface, to prolong its life.

The outer casing may be secured with respect to the well (i.e. with respect to the external geology). In particular, this may be achieved by cementing the outer casing to the well wall. On the other hand, the inner casing may be individually removable from the well for replacement or repair. The well may comprise a well head, and the inner casing can be hung from the well head, allowing for relatively straightforward removal when desired.

In embodiments, the hydrogen storage chamber has at least one inlet for receiving liquid hydrogen and at least one outlet for releasing liquid hydrogen. The at least one outlet to the hydrogen storage chamber can be connected to a purge line extending towards the bottom of the hydrogen storage chamber, with an opening at the bottom to allow hydrogen to enter the purge line from the bottom of the hydrogen storage chamber. The purge line may extend down to within approximately 1 meter of the bottom of the hydrogen storage chamber.

The hydrogen storage system may further comprise a circulating passage between the at least one outlet and the at least one inlet, whereby liquid hydrogen can be circulated from the outlet back to the inlet, through the circulating passage. While in the circulating passage, the liquid hydrogen may be subjected to cooing from a cooling system, before being returned to the hydrogen storage chamber. This helps to maintain the hydrogen at a sufficiently low temperature for efficient storage.

The well may be between 250 metres and 2,000 metres deep. More preferably, the well may be between 500 metres and 1,000 metres deep. At such depths, in typical geological formations, the surrounding geology is typically cooler than the ambient air on the surface (which in some regions can reach more than 40 degrees Celsius).

The well wall may comprise a cement wall, between the outer casing and the ground/earth surrounding the well.

In another embodiment, there is provided a method of forming a subsurface storage system comprising:
providing a well extending below a ground surface, through external geology;
inserting an outer casing into the well;
securing the outer casing with respect to the external geology; and
inserting an inner casing into the well to form a storage chamber within the inner casing, and to form an insulation chamber located between the inner casing and the outer casing.

The method may further comprise:
sealing the insulation chamber; and
removing air from the insulation chamber via a sealable opening, to create a vacuum in the insulation chamber.

The subsurface storage system formed by the method may be for storing hydrogen, in particular liquid hydrogen. In embodiments, the subsurface storage system may be suitable for storing other fluids, and in particular cryogenic liquids such as liquid nitrogen, liquid oxygen, liquid methane, liquid ethanol, propane or butane. Non-cryogenic fluids may be used in some embodiments of the invention.

In another embodiment of the present disclosure, there is provided a method of storing a cryogenic liquid, comprising:
feeding the cryogenic liquid into a hydrogen storage system according to the first embodiment described above;
maintaining a vacuum in the insulation chamber; and
maintaining the cryogenic liquid in liquid form using a surface-based cooling system.

In another embodiment of the present disclosure, there is provided a subsurface storage system for a fluid comprising:
a well extending below a ground surface, through external geology;
an inner casing extending substantially the depth of the well to define a storage chamber within the well, to store the fluid; and
at least one outer casing extending substantially the depth of the well, to define an insulation chamber located between the storage chamber and the external geology.

The fluid may be a liquid. The liquid may be a cryogenic liquid. The cryogenic may be liquid hydrogen. In embodiments, however, the subsurface storage system may be suitable for storing other fluids, and in particular cryogenic liquids such as liquid nitrogen, liquid oxygen, liquid methane, liquid ethanol, propane or butane. Non-cryogenic fluids may also be stored in some embodiments. Other features from the first embodiment may also be incorporated into this embodiment of the disclosure.

Various features, aspects, and advantages of the invention will become more apparent from the following description of embodiments of the invention, along with the accompanying drawings.

Unless defined otherwise, all technical and scientific terms used herein have the same meaning as commonly understood by one of ordinary skill in the art to which this invention belongs. Although any methods and materials similar or equivalent to those described herein can also be used in the practice or testing of the present invention, a limited number of the exemplary methods and materials are described herein.

### BRIEF DESCRIPTION OF THE FIGURES

Exemplary embodiments of the invention are described below by way of example only, and not by way of limitation. Referring now to the accompanying drawings in which like numerals indicate like elements throughout the several figures:
FIG. 1 is a cross sectional view of a subsurface hydrogen storage system according to an embodiment of the present disclosure.
FIG. 2 is a cross sectional view of the vacuum insulated tubing and joint according to the embodiment of Figure 1.
FIG. 3 is flow chart depicting a method of forming a subsurface hydrogen storage system, according to another embodiment of the present disclosure.

Embodiments will now be described more fully hereinafter with reference to the accompanying drawings, in which various embodiments, although not the only possible embodiments, of the invention are shown. The invention may be embodied in many different forms and should not be construed as being limited to the embodiments described below.

### DETAILED DESCRIPTION OF THE INVENTION

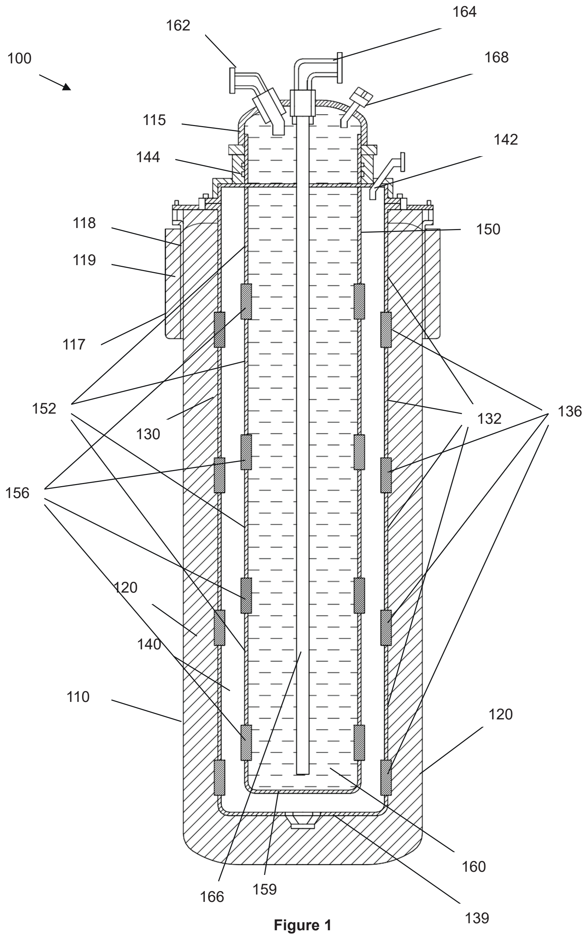

Referring to Figure 1, there is depicted a subsurface storage system 100 according to an embodiment of the present disclosure. For convenience, the illustrated embodiment will be described as a subsurface hydrogen storage system, for storing liquid hydrogen. However, it will be understood that other fluids could also be stored within the subsurface storage system 100, including other cryogenic liquids. Examples may include liquid nitrogen, liquid oxygen, liquid methane, liquid ethanol, propane or butane. Non-cryogenic fluids may also be stored in some embodiments.

The subsurface hydrogen storage system 100 comprises a well 110 of, in this embodiment, between 500 metres and 1,000 metres in depth, and at such depths the earth temperature is typically relatively constant, at between 10-20 degrees Celsius. The well depth can be varied depending on the desired size of the hydrogen storage system 100 (i.e. how much liquid hydrogen is intended to be stored), and in some circumstances may be adjusted based on the particular geology, but the above depths are indicative for most geological locations.

The well 110 of this embodiment has a diameter of approximately 25 to 29 inches (although different diameters are possible, depending on the size of the hydrogen storage system 100), and the well wall comprises a cement lining 120. The cement 120 can have insulation products added to it, to improve its insulation properties and improve the separation between the earth temperature and the temperature within the well 110.

The well 110 includes a well head 115 at the top of the well, which supports other components of the system 100 as described below, and a collar 117 around the circumference of the top portion of the well 110. The collar 117 of this embodiment extends to a depth of about 100 metres, and comprises a steel collar portion 118 and a cement collar portion 119. The collar is provided to protect the surface geology and ground water environments, and to provide an open well for the drilling of the remainder of the well

Inside the cement wall 120, two layers of casing are provided - outer casing 130 and inner casing 150. An insulation chamber 140 is formed between the outer casing 130 and the inner casing 150, with a seal 144 at the top, and a sealable opening 142 to provide access to the insulation chamber 140.

A hydrogen storage chamber 160 is formed within the inner casing 150. Liquid hydrogen can enter the storage chamber 160 through at least one hydrogen inlet 162 and exit the storage chamber 160 through a hydrogen outlet 164 (noting that in some embodiments, a single inlet/outlet could be provided).

By providing an insulated, subsurface hydrogen storage chamber 160, the present invention can store hydrogen more efficiently than conventional hydrogen storage systems. Furthermore, the design of this particular system 100 is relatively low cost, and some or all of the casing components can be replaced over time if required, resulting in a longer potential life of the system 100.

Turning now to the casing, both the inner casing 130 and the outer casing 150 can be formed using standard API casing, with multiple sections of casing joined together. The outer casing 130 comprises a plurality of tubular outer casing sections 132 (i.e. pipes) joined together with threaded coupling joints 136, with an outer casing cap 139 at the bottom. The inner casing 150 comprises a plurality of tubular inner casing sections 152 joined together with threaded coupling joints 156, with an inner casing cap 159 at the bottom.

The tubular outer casing sections 132 can, in this embodiment, be standard API casing sections of approximately 22 to 24 inches in diameter, which are cemented from top to bottom of the well 110 using the insulated cement 120. The outer casing cap 139 of this embodiment includes a cement check valve to cater for cement 120 to be pumped via drill pipe to push cement to the surface, outside of the outer casing, during installation.

The tubular inner casing sections 156 can, in this embodiment, be standard casing sections of narrower diameter (e.g. standard steel threaded L80 sections of 18 5/8 inches diameter). The inner casing 150, including the inner casing cap 159 at the bottom, are lined with hydrogen resistant lining to help prevent hydrogen leakage into the insulation chamber 140 outside the inner casing 150.

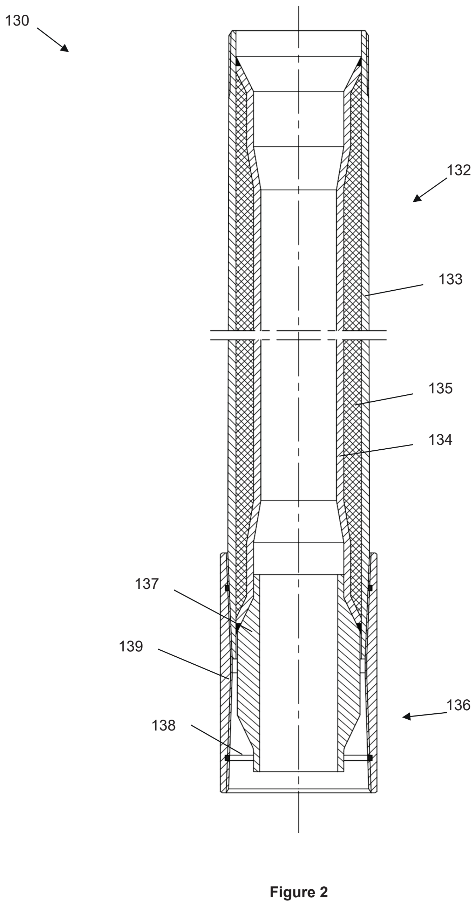

Figure 2 depicts, in more detail, the design option of VIT (Vacuum Insulated Casing) as a hydrogen storage container to provide an additional insulation barrier and consisting of the threaded joints 134 and a casing section 132. Hydrogen resistant lining can be applied to the inside surface of standard VIT casing that is readily available from global VIT casing manufacturers and suppliers. The casing section 132 comprises an outer tube 133 and an inner tube 134, with heat vacuum or insulation material 135 captured between them. The threaded joint 136 comprises a coupling 139 to threadedly engage around the outside of the casing section 132 - the coupling 137 is generally an internally threaded (female) component, which connects to externally threaded pin ends of a two different casing sections 132. A seal ring 138 is provided within the coupling, as depicted, to provide a gas-tight seal.

The inner casing sections 152 are joined together in the same manner, except with narrower pipe sections.

For additional insulation, the outer casing joints 136 also have insulation liners 137 (as depicted in Figure 2) to reduce energy (temperature) losses or gains through the joints. Equivalent liners can be provided in inner casing joints 156.

The use of premium threaded joints (for API tubing) improves the sealing properties of the casing, as premium threaded joints that have better sealing properties than standard connecting joints. Accordingly, the outer casing 130 and inner casing 150 define two chambers 140, 160 within the well, which in this embodiment are substantially gas tight.

The insulation chamber 140 is defined between the outer casing 130 and the inner casing 150. Both the casings 130, 150 and the cement 120 serve to form a barrier to the geology, to hold pressure or vacuum within the insulation chamber 140. Accordingly, once both lengths of casing 130, 150 are installed, and both held and sealed by the well head 115, a vacuum pump can be connected to a sealable opening 142 (or vacuum connection) into the insulation chamber 140. Accordingly, air within the insulation chamber 140 can be removed to cause and maintain a vacuum. The level of vacuum can be varied and any leakage at any joint can be overcome by increasing the vacuum pump rate.

If, over time, the vacuum leakage increases to unsustainable levels (e.g. after 20 years), then an insulating liquid, such as oil, foam, ceramics etc can be pumped through the sealable opening 142to provide insulation material instead of a vacuum.

The hydrogen storage chamber 160 is defined by the inner casing 150, as depicted in Figure 1. As previously described, the inner casing 150 (or at least, the inner surface of inner casing 150) has a hydrogen resistant lining - preferably applied to not only the inner casing sections 152 but also the threaded joints 156 of the inner casing 150 and the bottom cap 159. This inner casing 130 is preferably installed inside of the outer casing 150 and centralised with standard casing centralisers fitted on every 2 to 6th casing joint (not depicted in Figure 1). The inner casing 130 is lowered to within about 1m above the outer casing bottom cap and is hung by the well head 115.

The hydrogen storage chamber 160 includes an inlet 162 and outlet 164 (noting that, depending on particular embodiments, a single opening could function as an inlet outlet). A purge line 166 is installed through the well head 115, in fluid connection with the hydrogen outlet 164, and hung to within 1 metre of the bottom of the hydrogen storage chamber 160. This purge line 166, generally formed of piping of e.g. 2-inch diameter (which may be fully lined with hydrogen resistant lining) 2" pipe, is used to extract hydrogen from the hydrogen storage chamber 160.

A circulation passage (not shown) may be provided to circulate the hydrogen from the hydrogen outlet 164, through the circulation passage and back to the hydrogen inlet 162. While in the circulation passage, the hydrogen may be circulated through a cooling system (not depicted) on the surface. If the hydrogen is to be removed entirely from the system 100 (e.g. for casing repair or replacement), then the purge line 166 would be used to pump the liquid hydrogen from the hydrogen storage chamber, or the cooling system can be shut down allowing the hydrogen to heat and turn into a gas. As a gas, the hydrogen can be exhausted from the storage chamber 160 through one of the openings 162, 164.

For safety reasons, a pressure release valve 168 is also provided at the top of the hydrogen storage chamber 160, to allow the hydrogen to escape if too much pressure builds up.

Because it is not cemented or otherwise fixed in the well, the inner casing 150 can be removed for repair or replacement in the future. This provides a significant advantage over other vacuum casing systems, which may comprise inseparable casing segments that are cemented in the well.

Over time, different sized casings could also be installed to replace the original casings 130, 150, if future developments in hydrogen casing provide improved products.

In some embodiments, the inner casing 150 could itself be provided as vacuum insulated tubing (VIT), to provide even better insulation for the liquid hydrogen within the hydrogen storage chamber 160. Installing VIT (if it were lined with hydrogen leakage resistance material) as the inner hydrogen storage casing would provide two separate vacuum insulated areas between the geology and the hydrogen. This would further improve the energy efficiency to maintain the hydrogen in a liquid state.

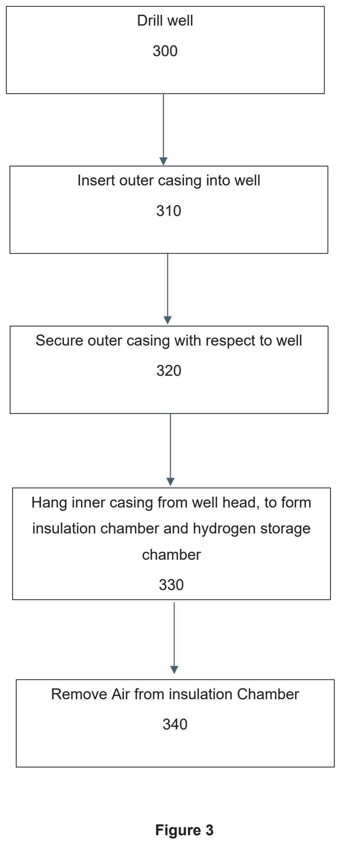

Figure 3 depicts a simple method according to the present invention, to install the system 100. The well 110 is first drilled 300. The outer casing 130 is then inserted 310 into the well, and cement 120 pumped through the cement check valve at the bottom of outer casing 130 to secure 320 the outer casing 130 in the well.

The inner casing 150 can then be inserted 330 into the well, hung from the well head 115, and sealed as shown in Figure 1. This results in the formation of both the insulation chamber 140 and the hydrogen storage chamber 160.

Air can then be removed 340 from the insulation chamber 140, using a vacuum pump. In some embodiments, the vacuum pump can be run continuously to maintain the vacuum in the insulation chamber 140, although in other embodiments with minimal leakage, the vacuum pump may only need to be used occasionally.

Liquid hydrogen or gases can be fed into the hydrogen storage chamber 160, to be stored there. However, the system may also circulate the liquid hydrogen or gasses in and out of the storage chamber 160 through a circulation passage. While in the circulation passage, a surface-based cooling system can be used to help maintain the hydrogen at sufficient cryogenic temperatures to keep it in its liquid state.

The above-described system 100 has numerous significant advantages over surface-based hydrogen storage systems, or over other attempts to provide insulation in sub-surface environments.

The system 100 of the present disclosure provides superior insulation to reduce the amount of energy (cost) to maintain the hydrogen temperature at below -253 degrees Celsius.

It also provides a lower installation cost (CAPEX) for hydrogen storage, a safer hydrogen storage system, and a smaller land footprint compared to surface hydrogen storage systems. On the issue of safety, even if the hydrogen ignites and there is an explosion, the blast area will be upwards - away from persons and properties, unlike typical surface-based storage systems.

Also, because the system 100 stores and maintains hydrogen in its liquid form, it can hold around 7 times more hydrogen than a compressed gas hydrogen storage.

Another advantage of the above-described system 100 is that it uses standard API casing. Not only is standard API casing much less expensive than vacuum insulated casing products, but if there is a leak of hydrogen into the insulation chamber 140, the hydrogen can be removed and captured by the vacuum pump. In contrast, if an alternative such as VIT were used, it would not be possible (or extremely difficult) to remove the hydrogen from the individual lengths or joints of VIT casing vacuum area.

Furthermore, if there is corrosion, damage etc to any of the VIT joints installed in a well, then this joint loses all insulation properties. Generally, VIT would be cemented into the well and cannot be removed so this loss of insulation properties is essentially permanent, or extremely difficult to repair. In contrast, with the present disclosure, if VIT were used it could be hung from the well head 15 as the inner casing 150. In the system of the present disclosure, if too many joints of the VIT lose their insulation properties (vacuum), then the total string of VIT can be removed and replaced.

Those skilled in the art who review this disclosure will readily appreciate that many modifications are possible to the above descried embodiment(s) (e.g. variations in sizes, dimensions, structures, shapes and proportions of the various elements, values of parameters, mounting arrangements, use of materials, colours, orientations, etc.) without materially departing from the novel teachings and advantages of the subject matter described herein. For example, elements shown as integrally formed may be constructed of multiple parts or elements, the position of elements may be reversed or otherwise varied, and the nature or number of discrete elements or positions may be altered or varied. The order or sequence of any process or method steps may be varied or re-sequenced according to alternative embodiments. Additionally, features from particular embodiments may be combined with features from other embodiments as would be understood by one of ordinary skill in the art. Other substitutions, modifications, changes and omissions may also be made in the design, operating conditions and arrangement of the various example embodiments without departing from the scope of the present invention.

As used herein and in the appended claims, the singular form of a word includes the plural, unless the context clearly dictates otherwise. Thus, the references "a," "an" and "the" are generally inclusive of the plurals of the respective terms. For example, reference to "a feature" includes a plurality of such "features." The term "and/or" used in the context of "X and/or Y" should be interpreted as "X," or "Y," or "X and Y.

It should be noted that any use of the term "example" herein to describe various embodiments is intended to indicate that such embodiments are possible examples, representations, and/or illustrations of possible embodiments (and such term is not intended to connote that such embodiments are necessarily extraordinary or superlative examples). Further, as utilized herein, the term "substantially" and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed (e.g. within plus or minus five percent of a given angle or other value) are considered to be within the scope of the invention as recited in the appended claims. The term "approximately" when used with respect to values means plus or minus five percent of the associated value.

The terms "coupled" and the like as used herein mean the joining of two members directly or indirectly to one another. Such joining may be stationary (e.g. permanent) or moveable (e.g. removable or releasable). Such joining may be achieved with the two members or the two members and any additional intermediate members being integrally formed as a single unitary body with one another or with the two members or the two members and any additional intermediate members being attached to one another.

It should be noted that although the diagrams herein may show a specific order and composition of method steps, it is understood that the order of these steps may differ from what is depicted. For example, two or more steps may be performed concurrently or with partial concurrence. Also, some method steps that are performed as discrete steps may be combined, steps being performed as a combined step may be separated into discrete steps, the sequence of certain processes may be reversed or otherwise varied, and the nature or number of discrete processes may be altered or varied. The order or sequence of any element or apparatus may be varied or substituted according to alternative embodiments. Accordingly, all such modifications are intended to be included within the scope of the present disclosure as defined in the appended claims.

Without further elaboration, it is believed that one skilled in the art can use the preceding description to utilise the claimed inventions to their fullest extent. The examples and embodiments disclosed herein are to be construed as merely illustrative and not a limitation of the scope of the present disclosure in any way. It will be apparent to those having skill in the art that changes may be made to the details of the above-described embodiments without departing from the underlying principles discussed. In other words, various modifications and improvements of the embodiments specifically disclosed in the description above are within the scope of the appended claims. For example, any suitable combination of features of the various embodiments described is contemplated.

It is to be understood that, if any prior art publication is referred to herein, such reference does not constitute an admission that the publication forms a part of the common general knowledge in the art, in Australia or any other country.

In the claims which follow and in the preceding description of the invention, except where the context requires otherwise due to express language or necessary implication, the word "comprise" or variations such as "comprises" or "comprising" is used in an inclusive sense, ie. to specify the presence of the stated features but not to preclude the presence or addition of further features in various embodiments of the invention.

**LEGEND**

| **No.** | **Description** | **No.** | **Description** |
|---|---|---|---|
| **100** | Subsurface hydrogen storage system | **160** | Hydrogen storage chamber |
| **110** | Well | **162** | Hydrogen inlet |
| **115** | Well head | **164** | Hydrogen outlet |
| **117** | Collar | **166** | Purge line |
| **118** | Steel collar | **168** | Pressure safety valve |
| **119** | Cement collar | | |
| **120** | Cement | **300** | Provide well |
| **130** | Outer casing | **310** | Insert outer casing |
| **132** | Outer casing sections | **320** | Secure outer casing to well |
| **133** | Outer tube of outer casing section | **330** | Insert and seal inner casing |
| **134** | Inner tube of outer casing section | **340** | Remove air from insulation chamber |
| **135** | Heat insulation material | | |
| **136** | Outer casing joints | | |
| **137** | Heat insulation liner | | |
| **138** | Seal ring | | |
| **139** | Coupling | | |
| **140** | Insulation chamber | | |
| **142** | Sealable opening | | |
| **144** | Seal to insulation chamber | | |
| **150** | Inner casing | | |
| **152** | Inner casing sections | | |
| **156** | Inner casing joints | | |

## Claims

1. A subsurface storage system for storing hydrogen comprising:
a well extending below a ground surface, through external geology;
an inner casing extending substantially the depth of the well to define a hydrogen storage chamber within the well, to store liquid hydrogen; and
at least one outer casing extending substantially the depth of the well, to define an insulation chamber located between the hydrogen storage chamber and the external geology.

2. The subsurface storage system of claim 1, wherein the insulation chamber is a vacuum insulation chamber.

3. The subsurface storage system of claim 1, wherein the insulation chamber is filled within insulation material.

4. The subsurface storage system of claim 1, wherein there is a single outer casing, and the insulation chamber is defined between the inner casing and the outer casing.

5. The subsurface storage system of claim 1, wherein the well comprises a well head, and the inner casing is hung from the well head.

6. The subsurface storage system of claim 1, wherein the inner casing is individually removable from the well for replacement ore repair.

7. The subsurface storage system of claim 1, wherein there is a single outer casing, and the outer casing is secured with respect to the well.

8. The subsurface storage system of claim 7, wherein the outer casing is cemented to the well.

9. The subsurface storage system of claim 1, wherein the inner casing comprises a plurality of inner casing sections, connected with inner casing joints along a vertical length of the inner casing.

10. The subsurface storage system of claim 9, wherein the inner casing sections comprise standard API casing sections.

11. The subsurface storage system of claim 9, wherein the inner casing joints are threaded joints.

12. The subsurface storage system of claim 1, wherein the or each outer casing comprises a plurality of outer casing sections, connected with outer casing joints along a vertical length of the outer casing.

13. The subsurface storage system of claim 12, wherein the outer casing sections comprise standard API casing sections.

14. The subsurface storage system of claim 12, wherein the outer casing joints are threaded joints.

15. The subsurface storage system of claim 1, wherein the insulation chamber comprises a sealable opening towards a top of the well, to allow air to be removed from the insulation chamber to create a vacuum therein.

16. The subsurface storage system of claim 15, further comprising a vacuum pump to remove the air from the insulation chamber.

17. The subsurface storage system of claim 1, wherein the hydrogen storage chamber has at least one inlet for receiving liquid hydrogen and at least one outlet for releasing liquid hydrogen.

18. The subsurface storage system of claim 17, wherein the outlet to the hydrogen storage chamber is connected to a purge line extending towards the bottom of the hydrogen storage chamber.

19. The subsurface storage system of claim 18, wherein the purge line extends within approximately 1 meter of the bottom of the hydrogen storage chamber.

20. The subsurface storage system of claim 17, further comprising:
a circulating passage between the at least one outlet and the at least one inlet; and
a cooling system to cool hydrogen in the circulating passage.

21. The subsurface storage system of claim 1, wherein an inner surface of the inner casing is lined with a hydrogen resistant lining.

22. A method of forming a subsurface storage system comprising:
providing a well extending below a ground surface, through external geology;
inserting an outer casing into the well;
securing the outer casing with respect to the external geology; and
inserting an inner casing into the well to form a hydrogen storage chamber within the inner casing, and to form an insulation chamber located between the inner casing and the outer casing.

23. The method of claim 22, further comprising:
sealing the insulation chamber; and
removing air from the insulation chamber via a sealable opening, to create a vacuum in the insulation chamber.

24. A subsurface storage system for a fluid comprising:
a well extending below a ground surface, through external geology;
an inner casing extending substantially the depth of the well to define a storage chamber within the well, to store the fluid; and
at least one outer casing extending substantially the depth of the well, to define an insulation chamber located between the storage chamber and the external geology.

25. The subsurface storage system of claim 24, wherein the fluid is a cryogenic liquid.

26. The subsurface storage system of claim 25, wherein the cryogenic liquid is liquid hydrogen.

27. A method of storing a cryogenic liquid, comprising:
feeding the cryogenic liquid into a subsurface storage system according to claim 24;
maintaining a vacuum in the insulation chamber; and
maintaining the cryogenic liquid in liquid form using a surface-based cooling system.
